# EUROPEAN PATENT APPLICATION

(11) **EP 1 469 461 A1**
(43) Date of publication of application: **20.10.2004**
(21) Application number: 03703016.0
(22) Date of filing: 22.01.2003
(51) Int. Cl.: G11B 7/007, G11B 7/005, G11B 7/24

(54) **DISC-SHAPED OPTICAL RECORDING MEDIUM AND REPRODUCTION LIMIT METHOD THEREOF**

(30) Priority: 23.01.2002 JP 2002014452
(71) Applicant: Sony Corporation, Tokyo 141-0001 (JP)
(72) Inventor: SABI, Yuichi c/o SONY CORPORATION, Tokyo 141-0001 (JP); IWAMURA, Takashi c/o SONY CORPORATION, Tokyo 141-0001 (JP)
(74) Representative: Melzer, Wolfgang, Dipl.-Ing.
(86) International application number: PCT/JP2003/000534
(87) International publication number: WO 2003/063147

(57) **Abstract**

A disk type optical recording medium that can limit the reproduction by a disk drive connected to a computer without drastically changing the specifications of recorded information on the medium conventionally processed by a dedicated player, thereby preventing illegal copying or the like. The disk type optical recording medium has information tracks formed by a pit train, and the information tracks have a read limiting region formed by a modified pit train including a special wobble or lateral displacement as modified from the pit train. In this read limiting region, the modified pit train can be followed by the tracking control of an optical pickup during low-speed rotation of the medium, thereby allowing proper reproduction. However, the modified pit train cannot be followed by the tracking control of the optical pickup during high-speed rotation of the medium, thereby disallowing the reproduction.

## Description

### Technical Field

The present invention relates to a disk type optical recording medium such as a CD (Compact Disk) and a DVD (Digital Versatile Disk) using different formats, and also to a reproduction limiting method for such a disk type optical recording medium.

### Background Art

Conventionally, a CD for reproduction of music information only, for example, is in widespread use, and various kinds of music can be reproduced by a dedicated CD player. In this case, digital information reproduced from the CD by the CD player is converted into an analog audio signal, which is in turn output to a speaker, tape recorder, etc.

On the other hand, there is provided a CD-ROM or CD-R for data processing, which is mainly used in peripheral equipment for a computer. Such a CD-ROM or CD-R is used for storage or recording of data to be processed by a computer through a disk drive. In this case, information in the CD-ROM or CD-R is handled in the state of digital information.

With the widespread use of various computers in recent years, any person can easily perform arbitrary processing of digital music information recorded on a conventional music CD or massive copying of the digital music information to a CD-R by inserting the CD into a disk drive connected to a computer to reproduce the recorded information and capture the information into the computer.

Thus, it is convenient to capture music information recorded on a CD as lossless digital data. However, a problem on copyright protection has occurred to become a social issue. That is, the problem includes transferring or selling to others a CD-R whose contents are completely the same as those of an original CD, and also includes distributing a favorite piece of music included in a CD through a network to others. Thus, this problem has become serious with the broadbanziation of the network.

On the other hand, a CD and a CD player have already been in widespread use, so that it is virtually impossible to change the formats for the CD and the CD player.

In particular, the CD format has already been standardized in detail so that the CD can be reproduced on every CD player without problems. Accordingly, it is impossible at present to desire drastic measures such that additional information is carried by a digital signal to prevent the copying.

It is accordingly an object of the present invention to provide a disk type optical recording medium that can limit the reproduction of digital information recorded on the medium by another disk drive without drastically changing the specifications of recorded information on the medium conventionally processed by a dedicated player, thereby preventing illegal copying or the like to protect digital contents.

It is another object of the present invention to provide a reproduction limiting method for such a disk type optical recording medium.

### Disclosure of Invention

In accordance with an aspect of the present invention, there is provided a disk type optical recording medium including a disk substrate having an information recording surface, and information tracks formed by a pit train on the information recording surface and adapted to be read by tracking control and focusing control of an optical pickup. At least a part of the information tracks has a read limiting region formed by a modified pit train that can be followed by the tracking control of the optical pickup during low-speed rotation of the medium, but cannot be followed by the tracking control of the optical pickup during high-speed rotation of the medium, thereby limiting the reading of information from the medium during high-speed rotation of the medium.

In accordance with another aspect of the present invention, there is provided a reproduction limiting method for a disk type optical recording medium including a disk substrate having an information recording surface, and information tracks formed by a pit train on the information recording surface and adapted to be read by tracking control and focusing control of an optical pickup. At least a part of the information tracks has a read limiting region formed by a modified pit train that can be followed by the tracking control of the optical pickup during low-speed rotation of the medium, but cannot be followed by the tracking control of the optical pickup during high-speed rotation of the medium, thereby limiting the reading of information from the medium during high-speed rotation of the medium.

In the disk type optical recording medium according to the present invention, a read limiting region formed by a modified pit train is provided. The modified pit train can be followed by the tracking control of the optical pickup during low-speed rotation of the medium, but cannot be followed by the tracking control of the optical pickup during high-speed rotation of the medium, thereby limiting the reading of information from the medium during high-speed rotation of the medium.

Accordingly, the reproduction of digital information recorded on the medium by another disk drive can be limited without drastically changing the specifications of recorded information on the medium conventionally processed by a dedicated player, thereby preventing illegal copying or the like to protect digital contents.

In the reproduction limiting method according to the present invention, a read limiting region formed by a modified pit train is provided. The modified pit train can be followed by the tracking control of the optical pickup during low-speed rotation of the medium, but cannot be followed by the tracking control of the optical pickup during high-speed rotation of the medium, thereby limiting the reading of information from the medium during high-speed rotation of the medium.

Accordingly, the reproduction of digital information recorded on the medium by another disk drive can be limited without drastically changing the specifications of recorded information on the medium conventionally processed by a dedicated player, thereby preventing illegal copying or the like to protect digital contents.

### Brief Description of Drawings

FIG. 1 is a schematic plan view of a CD according to an aspect (first to fifth preferred embodiments) of the present invention.
FIG. 2 is a schematic illustration showing a manufacturing device for a master stamper for fabricating the CD shown in FIG. 1.
FIG. 3 is a schematic view illustrating the relation between a modified pit train and a beam spot according to a fifth preferred embodiment of the present invention.
FIG. 4 is a schematic plan view of a CD according to another aspect (sixth and seventh preferred embodiments) of the present invention.
FIG. 5 is a schematic view illustrating the relation between a modified pit train formed on the CD shown in FIG. 4 and a beam spot.
FIG. 6 is a graph for illustrating changes in characteristics of a reproduction signal based on the CD specifications.
FIG. 7 is a schematic plan view of a CD having the modified pit train shown in FIG. 3.

### Best Mode for Carrying Out the Invention

There will now be described some preferred embodiments of the disk type optical recording medium and the reproduction limiting method therefor according to the present invention.

Each preferred embodiment of the present invention provides a reproduction limiting method for a CD wherein information recorded on the CD can be reproduced by an ordinary audio CD player (dedicated reproducing device), but cannot be read by a CD player connected to a computer, that is, by a CD-ROM drive (versatile disk drive).

By using such a reproduction limiting method, the capture of music information included in the CD into the computer can be prevented, so that limitless distribution of such music information through a CD-R or a network can be inhibited to thereby allow copyright protection.

In the present invention, attention has been paid to the fact that a CD-ROM drive for use with a computer performs reproduction by rotating a CD at a rotational speed ten or more times that of an audio CD player, and means for preventing such reproduction during high-speed rotation has been given to the CD.

Such reproduction by the high-speed rotation of a CD is essential for smooth copying of information recorded on the CD. Accordingly, by inhibiting such reproduction by the high-speed rotation of a CD, much time is required to copy information recorded on the CD to another recording medium, thereby obtaining a deterring effect against illegal copying.

While each preferred embodiment employs a CD as an example of the disk type optical recording medium, a similar method is applicable also to a DVD or the like.

The principle on which each preferred embodiment is based is that a pit train (modified pit train) causing a tracking error to such an extent near the limit that can be followed by tracking servo in a CD reproducing device is intentionally formed on a CD. In other words, the reproduction is limited by using the modified pit train that can be followed by the tracking servo at the same rotational speed as that of an audio CD player, but cannot be followed by the tracking servo at a rotational speed ten or more times that of the audio CD player.

The tracking servo is an operation of oscillating an objective lens at a high speed with a biaxial actuator in an optical pickup for a reproducing device. However, since the inertia of the objective lens is large, there is an amplitude range that cannot be followed by the tracking servo.

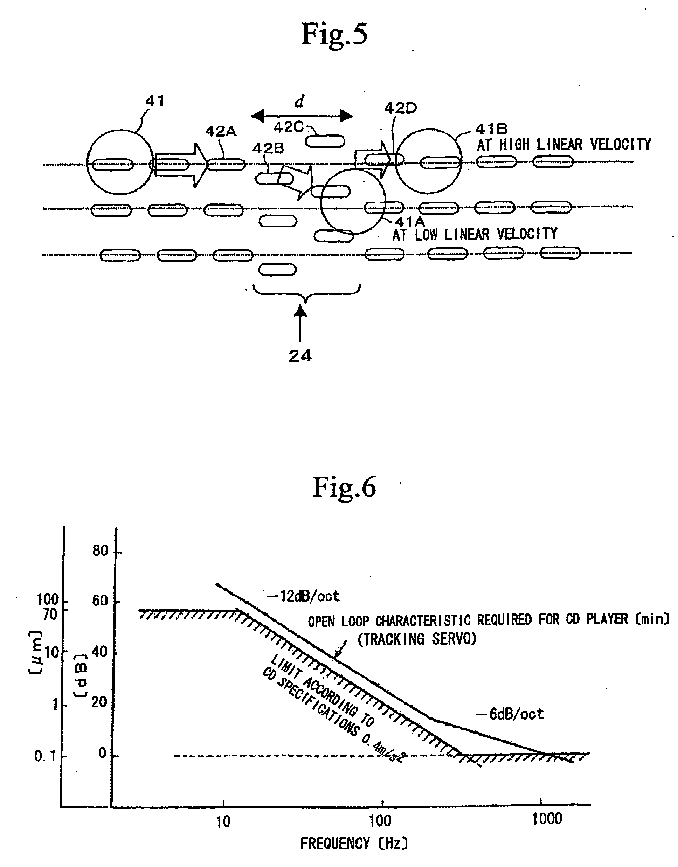

FIG. 6 is a graph for illustrating changes in characteristics of a reproduction signal based on the CD specifications. In FIG. 6, the horizontal axis represents a reproduction frequency (Hz), and the vertical axes represent an amplitude (µm and dB based on 0.1 µm) of the reproduction signal in a tracking direction.

As shown in FIG. 6, the amplitude range that can be followed by the tracking servo becomes narrower with an increase in the reproduction frequency.

In actual, it is empirically known that if a beam spot focused on a CD is deviated by 0.1 µm from the center of a track, the reproduction signal is degraded to cause an error, and this means the CD specifications. In other words, the tracking servo in a CD player is predicated on the condition that the beam spot follows the track in an offset range of 0.1 µm or less. If the beam spot falls out of this offset range, an error occurs and it is therefore necessary to generate a signal by error correction. In the case that many errors occur to such an extent that error correction cannot be effected, the reproduction becomes impossible.

In contrast, high-speed reproduction for a CD-ROM may be made possible by using a tracking servo system having an electrical high gain or by reducing the size of a lens to thereby reduce the inertia. However, there is a limit to size reduction of the lens, and it is physically impossible to increase the performance of tracking servo in response to an increase in linear velocity.

Accordingly, a reproducing operation near the limit shown in FIG. 6 becomes very unstable, and if the occurrence of reading errors near the limit during reproduction is sporadic, the reproduction can be effected by error correction, for example. However, if the whole of the disk is designed so that the reading errors are intended to become near the limit or if a partial area of the disk is designed so that the reading errors are intended to continuously and intensively become near the limit, the reproduction becomes difficult.

Under these circumstances, each preferred embodiment employs the above relation between the reproduction speed and the limit of the rearing errors to realize a CD whose recorded information cannot be read by the high-speed reproduction with a CD-ROM drive. Specific preferred embodiments of the present invention will now be described.

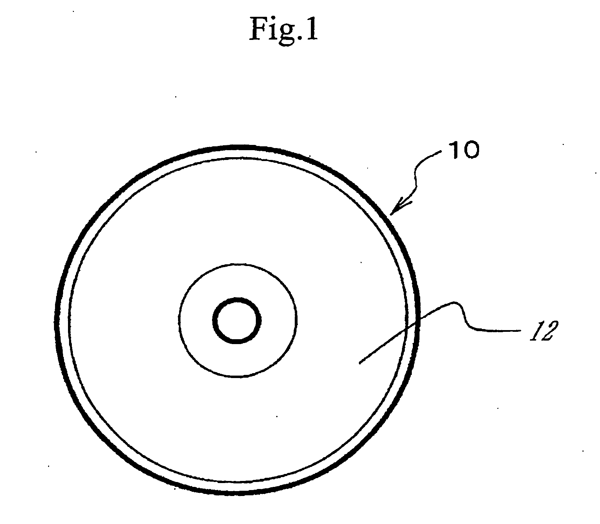

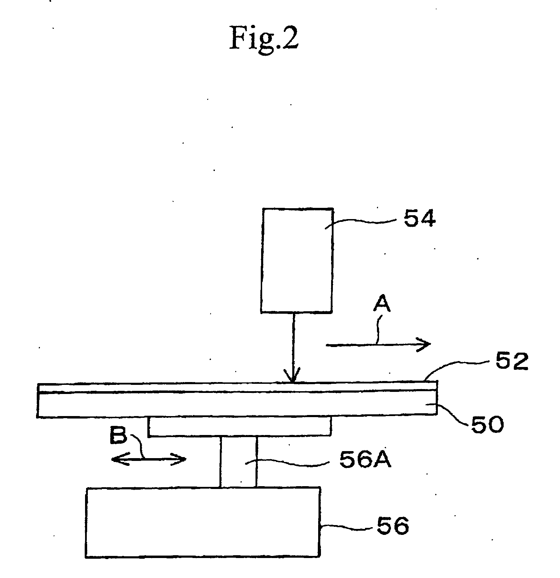

FIG. 1 is a schematic plan view of a CD according to an aspect (first to fifth preferred embodiments) of the present invention, and FIG. 2 is a schematic illustration showing a manufacturing device for a master stamper for fabricating the CD shown in FIG. 1. As shown in FIG. 1, a CD 10 has an information recording surface on one side, and this information recording surface has an information area 12 where information tracks are spirally formed so as to extend from a central portion of the disk.

In the first to fourth preferred embodiments, the information tracks of the CD 10 include a read limiting region formed by a modified pit train. The modified pit train is provided with a wobble that can be followed by the tracking servo during low-speed reproduction, but cannot be followed by the tracking servo during high-speed reproduction.

It is known that information tracks on a general optical disk are also provided with meandering (wobble) having a given period and that tracking servo is applied to this meandering by using a periodical tracking error signal. However, in this preferred embodiment, the wobble can be followed by the tracking servo only during low-speed reproduction by optimizing the amplitude and period of the wobble.

Since the information tracks or the wobble itself are/is known, the following description will be centered on specific preferred embodiments of the wobble to be provided as the modified pit train for read limiting and on manufacturing methods for the specific preferred embodiments.

### (First Preferred Embodiment)

In the first preferred embodiment, the amplitude A of the wobble is set to 0.2 µm and the frequency of the wobble is set to 200 Hz in the case that the reproduction speed of the CD is a linear velocity of 1.2 m/s.

A method of fabricating the CD will now be described.

First, a master stamper is fabricated, and a pit train formed on the master stamper is transferred onto a polycarbonate substrate by injection molding. In other words, the pit train is formed in fabricating the master stamper.

A process of forming the pit train on the master stamper will now be described with reference to FIG. 2. As shown in FIG. 2, photoresist 52 is coated on a glass disk 50, and this glass disk 50 is set on a spindle 56A of a disk rotating device 56. Then, a light beam from an exposure device 54 is focused on the upper surface of the photoresist 52 with the glass disk 50 being rotated by the disk rotating device 56, thereby exposing the photoresist 52 to form a pit pattern on the photoresist 52. At this time, spiral tracking is performed by mechanically gradually moving an optical system provided in the exposure device 54 or moving the spindle 56A in the radial direction of the disk (as shown by the arrow A in FIG. 2).

For example, the spindle 56A is moved in the radial direction of the disk by a feed mechanism, and the feed mechanism is improved so as to provide oscillation in the radial direction of the disk, thereby obtaining an arbitrary wobble shape (as shown by the arrow B in FIG. 2).

At this time, the amplitude of the oscillation is set to 0.2 µm and the frequency of the oscillation is set to 200 Hz in the case of reproduction at a linear velocity of 1.2 m/s. In other words, the distance (wavelength) corresponding to the period of the oscillation is 6 mm.

The track pitch TP must be set to 1.6 µm. In consideration of the fact that a maximum deviation of 0.1 µm falls within the specifications, a wobble having an amplitude of 0.2 µm is formed along the innermost track, and the period of the wobble is increased toward the outer tracks so that the track pitch becomes accurately 1.6 µm.

When the radial distance from the innermost track to a given outer track becomes 1.6 mm (corresponding to 1000 tracks), the formation of the wobble is once stopped to give an unwobbled track.

At this time, there is formed a region where the track pitch is reduced by 0.1 µm at the maximum because the amplitude of the wobble along the inner tracks is 0.2 µm.

After this unwobbled track is given, another wobble having an amplitude of 0.2 µm and a wavelength of 6 mm is formed again along 1000 outer tracks so as to accurately follow the track pitch of 1.6 µm.

When the formation of the wobble corresponding to the 1000 outer tracks is completed, an unwobbled track is given again. Subsequently, a similar operation is repeated to form a wobble along outer tracks. Thus, a pit train is formed on the entire recording surface of the CD.

As a test, the CD thus fabricated was applied to a commercially available, dedicated audio CD player for reproduction. As the result, the music recorded on the CD was reproduced without problems.

On the other hand, the CD was inserted into a commercially available CD-ROM drive (32X maximum). As the result, the TOC (Table Of Contents) of this CD was read and the number of tunes, the names of tunes, etc. were displayed. However, when a copy program for a CD-R was started, the information recorded on the CD was not read and the program did not respond. Further, reproduction was tried by using a CD reproducing software (CD player) included with Windows 98 by Microsoft Corporation. However, the music recorded on this CD was not reproduced.

According to the first preferred embodiment, the reproduction by a dedicated CD player can be ensured without changing the signal format in the conventional CD, and the reproduction by a CD-ROM drive connected to a computer can be prevented to thereby prevent illegal copying or the like.

### (Second Preferred Embodiment)

The second preferred embodiment is different from the first preferred embodiment only in the point that the amplitude of the wobble is set to 0.1 µm. That is, the frequency of the wobble is set to 200 Hz in the case that the reproduction speed of the CD is a linear velocity of 1.2 m/s as in the first preferred embodiment.

A reproduction test similar to that in the first preferred embodiment was made by using a commercially available, dedicated audio CD player and a commercially available CD-ROM drive (32X maximum).

As a result, the music recorded on the CD could be reproduced by the CD player. On the other hand, the music recorded on this CD was reproduced with the CD reproducing software by the CD-ROM drive. However, the sound was sometimes interrupted with the quality degraded.

According to the second preferred embodiment like the first preferred embodiment, the reproduction by a dedicated CD player can be ensured without changing the signal format in the conventional CD, and the reproduction by a CD-ROM drive connected to a computer can be substantially prevented to thereby prevent illegal copying or the like.

### (Third Preferred Embodiment)

The third preferred embodiment is different from the first preferred embodiment only in the point that the amplitude of the wobble is set to 0.08 µm. That is, the frequency of the wobble is set to 200 Hz in the case that the reproduction speed of the CD is a linear velocity of 1.2 m/s as in the first preferred embodiment.

A reproduction test similar to that in the first preferred embodiment was made by using a commercially available, dedicated audio CD player and a commercially available CD-ROM drive (32X maximum).

As a result, the music recorded on the CD could be reproduced by the CD player. On the other hand, the music recorded on this CD was normally reproduced with the CD reproducing software by the CD-ROM drive. However, whether or not the sound quality was degraded depends on the judgment of individuals actually listened to the music, and there is some question as to whether the music information could be completely read. It has been found that the music information can be read at a practically acceptable level in the case of setting the amplitude of the wobble to 0.08 µm or less.

### (Fourth Preferred Embodiment)

The fourth preferred embodiment is different from the first preferred embodiment only in the point that the amplitude of the wobble is set to 1.6 µm. That is, the frequency of the wobble is set to 200 Hz in the case that the reproduction speed of the CD is a linear velocity of 1.2 m/s as in the first preferred embodiment.

However, since the track pitch of 1.6 µm must be ensured, the wobble is formed by the amount corresponding to only three amplitudes along the innermost track.

Another wobble is formed along outer tracks so as to accurately follow the track pitch of 1.6 µm, so that the period of the wobble is increased with an increase in radial distance from the center of the CD, and the effect of the present invention is not exhibited at the outermost track.

However, the innermost track includes important information such as TOC. Accordingly, if the innermost track cannot be reproduced, the effect of the present invention can be basically exhibited. Further, since the amplitude is large, errors occur more easily during high-speed reproduction as compared with the first to third preferred embodiments, so that it can be expected to obtain a high effect of preventing illegal reproduction.

A reproduction test similar to that in the first preferred embodiment was made by using a commercially available, dedicated audio CD player and a commercially available CD-ROM drive (32X maximum).

As a result, there was a case that the CD could not be recognized by the CD player in the early stage of proliferation of CDs. However, there was also a case that reproduction could be performed by inserting the CD again and again.

On the other hand, the CD could not be recognized by the CD-ROM drive.

The third and fourth preferred embodiments are intended to specify the range between the amplitude A and the track pitch TP used in the present invention. More specifically, the amplitude A is set in the range of TP/20 < A < TP.

There will now be described a read limiting method according to another aspect (fifth to seventh preferred embodiments) of the present invention, wherein the above-mentioned wobble is not used as the modified pit train.

### (Fifth Preferred Embodiment)

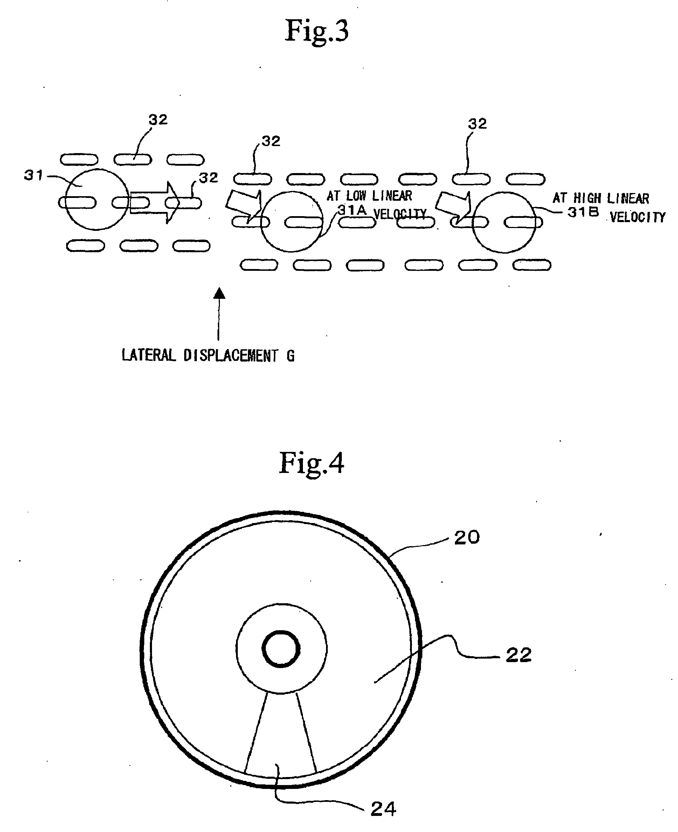

FIG. 3 is a schematic view illustrating the relation between a modified pit train and a beam spot according to the fifth preferred embodiment of the present invention.

In the fifth preferred embodiment, a pit pattern is spirally formed from the innermost track of the disk in an exposure process as in fabricating an ordinary master stamper.

In this exposure process, lateral displacement (i.e., displacement in the radial direction of the disk) G is given to the pit pattern as shown in FIG. 3. For example, this lateral displacement is given at six positions per track. Thus, the modified pit train in the read limiting region in this preferred embodiment includes the above-mentioned lateral displacement. In FIG. 3, three tracks are shown for illustration, and a beam spot 31 performs tracking on the central track of these three tracks.

The lateral displacement may be given by using an oscillating mechanism for forming a wobble as described with reference to FIG. 2. Further, the positions of the lateral displacement may be suitably selected from random positions or regular positions.

At each position of the lateral displacement on each track, the distance between circumferentially adjacent pits 32 must be set less than or equal to the half of the track pitch (i.e., the distance between radially adjacent pits 32) in principle. If the distance between the radially adjacent pits 32 is less than the distance between the circumferentially adjacent pits 32, the beam spot 31 tracking the pits 32 on the central track may erroneously detect the pits 32 on the radially outside or inside adjacent track, causing a problem such that the beam spot 31 may shift from the central track to the outside or inside adjacent track. In this preferred embodiment, the distance between the circumferentially adjacent pits at each position of the lateral displacement is set less than or equal to 1/3 of the track pitch TP.

Further, the amount of this lateral displacement is set to 0.2 µm in this preferred embodiment. Further, the lateral displacement is located at the same circumferential position so as to extend in the radial direction of the disk. Accordingly, the track pitch can be ensured accurately 1.6 µm at each position of the lateral displacement.

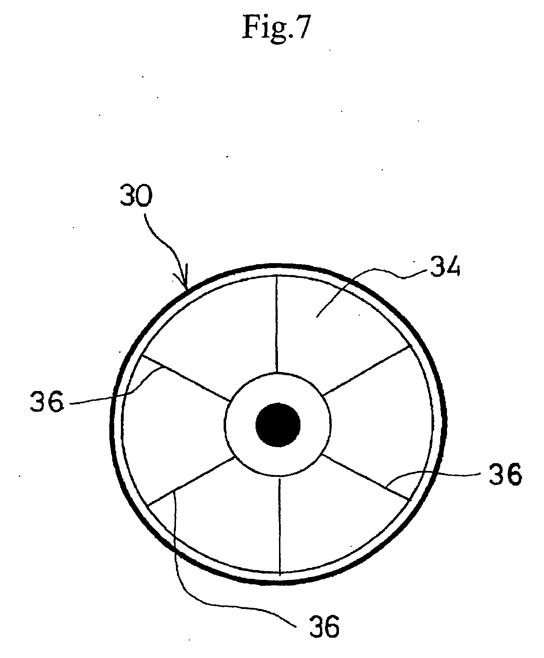

FIG. 7 is a schematic plan view of a CD according to this preferred embodiment employing the lateral displacement. As shown in FIG. 7, a CD 30 includes an information area 34 and six regions 36 each including the lateral displacement, wherein the six regions 36 are located at circumferentially equal intervals so as to extend in the radial direction of the disk.

With the CD as mentioned above, a reproduction test similar to that in the first preferred embodiment was made by using a commercially available, dedicated audio CD player and a commercially available CD-ROM drive (32X maximum).

As a result, the music recorded on the CD could be reproduced without problems by the CD player.

On the other hand, although the CD was inserted into the CD-ROM drive, the CD was not recognized.

This result may be caused by the following. At a low linear velocity, the beam spot after passing the region of the lateral displacement is offset by more than 0.1 µm from the center of the track during the travel of about 1 to 5 mm (from the beam spot 31 to the beam spot 31A), and a good reproduction signal cannot be obtained only at this region, so that the reproduction can be performed by error correction. In contrast, at a high linear velocity, the reproduction cannot be performed during a longer travel (from the beam spot 31 to the beam spot 31B) until proper tracking is reached. This longer travel is beyond an allowable range of error correction.

According to the fifth preferred embodiment, the reproduction by a dedicated CD player can be ensured without changing the signal format in the conventional CD, and the reproduction by a CD-ROM drive connected to a computer can be prevented to thereby prevent illegal copying or the like.

### (Sixth Preferred Embodiment)

FIG. 4 is a schematic plan view of a CD according to another aspect (sixth and seventh preferred embodiments) of the present invention, and FIG. 5 is a schematic view illustrating the relation between a beam spot and a modified pit train formed on the CD shown in FIG. 4.

As shown in FIG. 4, a CD 20 has an information recording surface on one side, and this information recording surface has an information area 22 where information tracks are concentrically formed.

Further, as shown in FIG. 5, a part of the information tracks is formed as a guide portion 24 for guiding a beam spot from one track to its outer adjacent track. During low-speed reproduction, the beam spot is properly guided through the guide portion 24 to the outer adjacent track. However, during high-speed reproduction, the beam spot cannot properly follow the guide portion 24 and cannot therefore shift to the outer adjacent track, so that the reproduction becomes impossible.

In fabricating the CD 20, the concentric tracks are basically formed and information is sequentially recorded from the innermost track toward the outermost track. In forming the concentric tracks, a specific modified pit train (i.e., the guide portion 24) for guiding the beam spot from one track to its outer adjacent track is formed. The formation of such a specific modified pit train may be effected by using an exposure device with an oscillating mechanism as described in the first to fifth preferred embodiments.

In this guide portion 24, the distance d between circumferentially adjacent pits 42A and 42D except guiding pits 42B and 42C at the innermost track is set to 5 mm in this preferred embodiment. This distance d is set to 1 cm or less at the maximum. As shown in FIG. 4, the guide portion 24 has a sectorial shape so that the distance d increases from the innermost track toward the outermost track so as to accurately ensure the track pitch of 1.6 µm.

With the CD as mentioned above, a reproduction test similar to that in the first preferred embodiment was made by using a commercially available, dedicated audio CD player and a commercially available CD-ROM drive (32X maximum).

As a result, the music recorded on the CD could be reproduced without problems by the CD player.

On the other hand, although the CD was inserted into the CD-ROM drive, the CD was not recognized.

This result may be caused by the following. At a low linear velocity, the beam spot 41 can follow the guiding pits 42B and 42C and can therefore properly shift to the outer adjacent track as shown by a beam spot 41A. In contrast, at a high linear velocity, the beam spot 41 cannot follow the guiding pits 42B and 42C and therefore follows the same track as shown by a beam spot 41B. Accordingly, in the CD-ROM drive, the guiding of the beam spot by the guide portion 24 is not effected, but the beam spot circularly follows the same track. As a result, the TOC of the CD cannot be read.

### (Seventh Preferred Embodiment)

A reproduction test similar to that in the sixth preferred embodiment was made by using the CD 20 different in that the distance d between the circumferentially adjacent pits 42A and 42D except the guiding pits 42B and 42C at the innermost track is set to 10 mm.

As a result, the music recorded on the CD could be reproduced without problems by a commercially available, dedicated CD player. On the other hand, when the CD was inserted into a CD-ROM drive for use with a computer, the CD was recognized. However, when the music recorded on the CD was tried to be reproduced by using the CD reproducing software included with Windows 98, noise was produced in several seconds and the reproduction of the music was interrupted.

This result may be caused by the fact that the guiding of the beam spot by the guide portion 24 is unstable, so that the beam spot circularly follows the same track during reproduction of the music, resulting in interruption of the reproduction.

According to each preferred embodiment mentioned above, high-speed reproduction by a CD-ROM drive connected to a computer is limited, thereby allowing the suppression of illegal copying of the information recorded on a CD to another medium.

While each preferred embodiment employs a CD as an example of the disk type optical recording medium according to the present invention, a similar method is applicable also to a DVD or the like. Further, the contents of the disk type optical recording medium are not limited to music information, but may include image information.

Further, while the reproduction speed in each preferred embodiment is based on a linear velocity, a similar method may be applied also to the case where the reproduction speed is based on a rotational speed (the number of revolutions). Further, the frequency of the wobble in the read limiting region is not limited to the specific numeric value in each preferred embodiment, but may be selected in the range of 10 Hz to 10 kHz.

Further, the modified pit train allowing the reading of information recorded on the medium during low-speed reproduction and inhibiting the proper reading of the information during high-speed reproduction is not limited to the means described in each preferred embodiment. Further, the specific numeric values mentioned in each preferred embodiment are merely illustrative and do not limit the present invention.

Thus, the present invention is not limited to the above-mentioned preferred embodiments, but various modifications may be made without departing from the scope of the present invention.

In the disk type optical recording medium according to the present invention, a read limiting region formed by a modified pit train is provided. The modified pit train can be followed by the tracking control of the optical pickup during low-speed rotation of the medium, but cannot be followed by the tracking control of the optical pickup during high-speed rotation of the medium, thereby limiting the reading of information from the medium during high-speed rotation of the medium. Accordingly, the reproduction of digital information recorded on the medium by another disk drive can be limited without drastically changing the specifications of recorded information on the medium conventionally processed by a dedicated player, thereby preventing illegal copying or the like to protect digital contents.

In the reproduction limiting method according to the present invention, a read limiting region formed by a modified pit train is provided. The modified pit train can be followed by the tracking control of the optical pickup during low-speed rotation of the medium, but cannot be followed by the tracking control of the optical pickup during high-speed rotation of the medium, thereby limiting the reading of information from the medium during high-speed rotation of the medium. Accordingly, the reproduction of digital information recorded on the medium by another disk drive can be limited without drastically changing the specifications of recorded information on the medium conventionally processed by a dedicated player, thereby preventing illegal copying or the like to protect digital contents.

## Claims

1. A disk type optical recording medium comprising a disk substrate having an information recording surface, and information tracks formed by a pit train on said information recording surface and adapted to be read by tracking control and focusing control of an optical pickup;
wherein at least a part of said information tracks has a read limiting region formed by a modified pit train that can be followed by the tracking control of said optical pickup during low-speed rotation of said medium, but cannot be followed by the tracking control of said optical pickup during high-speed rotation of said medium, thereby limiting the reading of information from said medium during high-speed rotation of said medium.

2. The disk type optical recording medium according to claim 1, wherein said modified pit train comprises a wobble having a curvature that can be followed by the tracking control of said optical pickup during low-speed rotation of said medium, but cannot be followed by the tracking control of said optical pickup during high-speed rotation of said medium.

3. The disk type optical recording medium according to claim 2, wherein said information tracks are spirally formed on said disk substrate.

4. The disk type optical recording medium according to claim 2, wherein said wobble has an amplitude A set in the range of TP/20 < A < TP where TP is the track pitch.

5. The disk type optical recording medium according to claim 2, wherein said wobble has a frequency set in the range of 10 Hz to 10 kHz.

6. The disk type optical recording medium according to claim 1, wherein said modified pit train comprises a lateral displacement of said information tracks that can be followed by the tracking control of said optical pickup during low-speed rotation of said medium, but cannot be followed by the tracking control of said optical pickup during high-speed rotation of said medium.

7. The disk type optical recording medium according to claim 6, wherein said information tracks are spirally formed on said disk substrate.

8. The disk type optical recording medium according to claim 6, wherein said lateral displacement is located regularly or randomly.

9. The disk type optical recording medium according to claim 6, wherein the distance between adjacent pits along the same track at a position of said lateral displacement is less than or equal to 1/3 of the track pitch TP.

10. The disk type optical recording medium according to claim 1, wherein said information tracks are concentrically formed on said disk substrate, and said modified pit train comprises a guide portion formed by a pit pattern adapted to guide a beam spot from one of said information tracks to another one adjacent thereto.

11. The disk type optical recording medium according to claim 10, wherein the distance between circumferentially adjacent pits along the same information track at said guide portion is set so that said pit pattern can be followed by the tracking control of said optical pickup during low-speed rotation of said medium, thereby allowing the shift of said beam spot to said adjacent information track, but cannot be followed by the tracking control of said optical pickup during high-speed rotation of said medium, thereby disallowing the shift of said beam spot to said adjacent information track.

12. The disk type optical recording medium according to claim 11, wherein said pit pattern is adapted to guide said beam spot from an inner one of said information tracks to an outer one adjacent thereto.

13. The disk type optical recording medium according to claim 11, wherein the distance between said circumferentially adjacent pits along the same information track at said guide portion is set to 1 cm or less.

14. The disk type optical recording medium according to claim 1, wherein the rotational speed of said medium during low-speed rotation is the same as that of said medium rotating in a dedicated reproducing device.

15. The disk type optical recording medium according to claim 14, wherein the rotational speed of said medium during high-speed rotation is higher by a predetermined proportion than said rotational speed during low-speed rotation.

16. The disk type optical recording medium according to claim 14, wherein the rotational speed of said medium during high-speed rotation is the same as that of said medium rotating in a versatile disk drive.

17. The disk type optical recording medium according to claim 16, wherein said versatile disk drive comprises a disk drive built in a computer or provided as peripheral equipment for a computer.

18. A reproduction limiting method for a disk type optical recording medium comprising a disk substrate having an information recording surface, and information tracks formed by a pit train on said information recording surface and adapted to be read by tracking control and focusing control of an optical pickup;
wherein at least a part of said information tracks has a read limiting region formed by a modified pit train that can be followed by the tracking control of said optical pickup during low-speed rotation of said medium, but cannot be followed by the tracking control of said optical pickup during high-speed rotation of said medium, thereby limiting the reading of information from said medium during high-speed rotation of said medium.

19. The reproduction limiting method for a disk type optical recording medium according to claim 18, wherein said modified pit train comprises a wobble having a curvature that can be followed by the tracking control of said optical pickup during low-speed rotation of said medium, but cannot be followed by the tracking control of said optical pickup during high-speed rotation of said medium.

20. The reproduction limiting method for a disk type optical recording medium according to claim 18, wherein said modified pit train comprises a lateral displacement of said information tracks that can be followed by the tracking control of said optical pickup during low-speed rotation of said medium, but cannot be followed by the tracking control of said optical pickup during high-speed rotation of said medium.

21. The reproduction limiting method for a disk type optical recording medium according to claim 18, wherein said information tracks are concentrically formed on said disk substrate, and said modified pit train comprises a guide portion formed by a pit pattern adapted to guide a beam spot from one of said information tracks to another one adjacent thereto; and
the distance between circumferentially adjacent pits along the same information track at said guide portion is set so that said pit pattern can be followed by the tracking control of said optical pickup during low-speed rotation of said medium, thereby allowing the shift of said beam spot to said adjacent information track, but cannot be followed by the tracking control of said optical pickup during high-speed rotation of said medium, thereby disallowing the shift of said beam spot to said adjacent information track.
